# EUROPEAN PATENT APPLICATION

(11) **EP 4 521 586 A1**
(43) Date of publication of application: **12.03.2025**
(21) Application number: 22956011.5
(22) Date of filing: 24.08.2022
(51) Int. Cl.: H02J 7/00, H02J 3/28

(54) **CONTROL METHOD AND CONTROL APPARATUS FOR ENERGY STORAGE SYSTEM**

(71) Applicant: Contemporary Amperex Technology Co., Limited, Ningde, Fujian 352100 (CN)
(72) Inventor: WU, Kai, Ningde, Fujian 352100 (CN); ZHANG, Miaomiao, Ningde, Fujian 352100 (CN); SHI, Mingzhang, Ningde, Fujian 352100 (CN); FENG, Zuoju, Ningde, Fujian 352100 (CN); LI, Xin, Ningde, Fujian 352100 (CN)
(74) Representative: Thoma, Michael
(86) International application number: PCT/CN2022/114491
(87) International publication number: WO 2024/040462

(57) **Abstract**

Embodiments of the present application provide a method and device for controlling an energy storage system. The energy storage system is coupled to an energy generation system. The energy storage system includes a plurality of energy storage units. The method includes the following steps: acquiring discharge power information of the energy generation system and status information of the energy storage system, the status information of the energy storage system including information of an undervoltage energy storage unit; and determining an energy management strategy of the energy storage system according to the discharge power information of the energy generation system and the status information of the energy storage system. According to the method and device for controlling an energy storage system provided in the embodiments of the present application, energy management of the energy storage system can be performed reasonably, so that the performance of the energy storage system is improved, and the service life of the energy storage system is prolonged.

## Description

### FIELD OF THE INVENTION

The present application relates to the technical field of energy storage, and particularly relates to a method and a device for controlling an energy storage system.

### BACKGROUND

With the rapid development of the new energy industry, a plenty of renewable energy systems such as wind power systems and photovoltaic systems access to a power grid. The renewable energy systems have the problem of great power fluctuation, which will cause severe fluctuation of the voltage and the frequency of the power grid, affecting the stability of the power grid.

The renewable energy systems are connected to an energy storage system, which may effectively alleviate the fluctuation of the output power. When the energy outputted by the renewable energy systems is too large, the renewable energy systems may be controlled to charge the energy storage system, so that energy waste is avoided. In a case where the energy generated by the renewable energy systems is insufficient, the energy storage system may be controlled to be discharged towards the power grid, so as to guarantee a smooth output of the total power. The charge and discharge modes frequently used by the energy storage system refer to distribute power according the state of charge (SOC) to charge and discharge all batteries in the energy storage system during charging and discharging every time. The above charge and discharge modes affect the performance and the service life of the energy storage system.

### SUMMARY

The embodiments of the present application provide a method and a device for controlling an energy storage system, where energy management of the energy storage system can be performed reasonably, so that the performance of the energy storage system is improved, and the service life of the energy storage system is prolonged.

In a first aspect, provided is a method and device for controlling an energy storage system. The energy storage system is coupled to an energy generation system. The energy storage system includes a plurality of energy storage units. The method includes the following steps: acquiring discharge power information of the energy generation system and status information of the energy storage system, the status information of the energy storage system including information of an undervoltage energy storage unit; and determining an energy management strategy of the energy storage system according to the discharge power information of the energy generation system and the status information of the energy storage system.

The solution for controlling an energy storage system provided in the embodiments of the present application comprehensively considers the discharge power information of the renewable energy system and the status information of the undervoltage energy storage unit included in the energy storage system, so that an energy management strategy of the energy storage system can be determined more reasonably, and energy management of the energy storage system can be performed flexibly, and therefore, the performance of the energy storage system is improved, and the service life of the energy storage system is prolonged.

In a possible implementation mode, the step of determining an energy management strategy of the energy storage system includes: in a case where there is the undervoltage energy storage unit in the energy storage system and the discharge power of the energy generation system is greater than zero, charging the undervoltage energy storage unit by utilizing the energy generation system.

According to the solution for controlling an energy storage system provided in the embodiments of the present application, in a case where there is the undervoltage energy storage unit in the energy storage system and the discharge power of the energy generation system is greater than zero, the undervoltage energy storage unit is charged preferably by utilizing the energy generation system. On the one hand, the undervoltage energy storage unit may be prevented from being over-discharged, so that the performance of the energy storage system is improved, and the service life of the energy storage system is prolonged. On the other hand, the undervoltage energy storage unit is charged preferably by utilizing the energy generation system, so that the charging cost can be lowered to a certain extent.

In a possible implementation mode, the status information of the energy storage system further includes discharge power information of a dischargeable energy storage unit, and the step of charging the undervoltage energy storage unit by utilizing the energy generation system includes: charging the undervoltage energy storage unit by utilizing the energy generation system and the dischargeable energy storage unit, where the discharge power of the energy generation system is less than a charging power of the undervoltage energy storage unit, and the discharge power of the dischargeable energy storage unit is greater than zero; or charging the undervoltage energy storage unit by utilizing the energy generation system and a power grid, where the discharge power of the energy generation system is less than the charging power of the undervoltage energy storage unit, and the discharge power of the dischargeable energy storage unit is equal to zero.

According to the solution for controlling an energy storage system provided in the embodiments of the present application, in a case where the discharge power of the energy generation system cannot satisfy a charge power requirement of the undervoltage energy storage unit, the undervoltage energy storage unit may also be charged by utilizing the dischargeable energy storage unit and/or the power grid. Thus, the charge power requirement of the undervoltage energy storage unit can be satisfied as far as possible, and the undervoltage energy storage unit may be prevented from being over-discharged, so that the performance of the energy storage system is improved, and the service life of the energy storage system is prolonged.

In a possible implementation mode, the step of determining an energy management strategy of the energy storage system includes: in a case where there is the undervoltage energy storage unit in the energy storage system and the discharge power of the renewable energy is equal to zero, charging the undervoltage energy storage unit by utilizing the dischargeable energy storage unit in the energy generation system and/or the power grid.

According to the solution for controlling an energy storage system provided in the embodiments of the present application, in a case where the energy generation system has no energy outputted, the undervoltage energy storage unit may be charged by utilizing the dischargeable energy storage unit in the energy generation system and/or the power grid, and the undervoltage energy storage unit can be prevented from being over-discharged, so that the performance of the energy storage system is improved, and the service life of the energy storage system is prolonged.

In a possible implementation mode, the status information of the energy storage system further includes discharge power information of the dischargeable energy storage unit, and the step of charging the undervoltage energy storage unit by utilizing the dischargeable energy storage unit and/or the power grid includes: in a case where the discharge power of the dischargeable energy storage unit is greater than zero, charging the undervoltage energy storage unit by utilizing the dischargeable energy storage unit; or in a case where the discharge power of the dischargeable energy storage unit is equal to zero, charging the undervoltage energy storage unit by utilizing the power grid.

According to the solution for managing energy of the energy storage system provided in the embodiments of the present application, it is guaranteed that the undervoltage energy storage unit is charged as far as possible, and the undervoltage energy storage unit is prevented from being over-discharged, so that the performance of the energy storage system is improved, and the service life of the energy storage system is prolonged. In addition, when the undervoltage energy storage unit is charged, the charging priority is considered fully. In a case where the energy generation system has no energy outputted, the dischargeable energy storage unit is utilized preferably, and secondarily, the power grid is utilized, so that the charging cost of the undervoltage energy storage unit may be lowered.

In a possible implementation mode, the step of determining an energy management strategy of the energy storage system includes: in a case where there is no undervoltage energy storage unit in the energy storage system and the discharge power of the energy generation system is greater than the discharge power of the power grid, controlling the energy generation system to charge the energy storage system.

According to the energy management strategy of the energy storage system provided in the embodiments of the present application, in a case where there is no undervoltage energy storage unit in the energy storage system, the energy generation system is preferably utilized to be discharged towards the power grid, and then the residual energy is outputted to the energy storage system. Thus, when the energy management strategy of the energy storage system is determined, the status information of the energy storage system, the discharge power of the energy generation system and the discharge power of the power grid are comprehensively considered, and energy management of the energy storage system can be performed reasonably, so that the performance of the energy storage system is improved, and the service life of the energy storage system is prolonged.

In a possible implementation mode, the status information of the energy storage system includes time information of the energy storage unit at a preset DOD interval, and the step of controlling the renewable energy to charge the energy storage system includes: in a case where there is a first energy storage unit in the energy storage system, charging the first energy storage unit, where the first energy storage unit is an energy storage unit, the time of which at the preset DOC interval is longer than or equal to a preset time.

According to the solution for controlling an energy storage system provided in the embodiments of the present application, when the energy storage system is charged, the energy storage unit at the preset DOD interval for a long time is preferably charged, so that the problem of inaccurate SOC caused by the long time of the energy storage system at the DOD interval may be avoided, over-charge and over-discharge caused by inaccurate SOC may be avoided, and the performance of the energy storage system is improved and the service life of the energy storage system is prolonged.

In a possible implementation mode, the status information of the energy storage system includes SOC information of the energy storage unit, and the step of controlling the renewable energy to charge the energy storage system includes: in a case where there is a second energy storage unit in the energy storage system, charging the second energy storage unit, where the second energy storage unit is an energy storage unit except for the first energy storage unit, with an SOC being less than or equal to a first charging threshold, and a charging priority of the second energy storage unit is inferior to that of the first energy storage unit.

According to the energy management strategy of the energy storage system provided in the embodiments of the present application, the SOC of the energy storage unit needs to be further considered. When other energy storage units except for the first energy storage unit at the preset DOD interval for the long time in the energy storage system are charged, the energy storage units with relatively less SOC can be preferably charged, so that the energy storage units with less SOC may be preferably charged, the energy storage units with less SOC are prevented from being over-discharged, and the performance of the energy storage system is improved and the service of the energy storage system is prolonged.

In a possible implementation mode, the step of controlling the renewable energy to charge the energy storage system includes: in a case where there is a third energy storage unit in the energy storage system, charging the third energy storage unit, where the third energy storage unit is an energy storage unit except for the first energy storage unit and the second energy storage unit, with an SOC being less than or equal to a second charging threshold and the second charging threshold being greater than the first charging threshold, and a charging priority of the third energy storage unit is inferior to that of the first energy storage unit or the second energy storage unit.

According to the solution for controlling an energy storage system provided in the embodiments of the present application, when the energy generation system is controlled to charge the energy storage system, the time information of the energy storage unit at the preset DOD interval and the SOC information of the energy storage unit are comprehensively considered, so that the energy storage unit can be charged in a certain priority order. The energy storage system is charged reasonably, the problem of over-charge or over-discharge of the energy storage unit caused by inaccurate SOC of the energy storage unit may be avoided, and the charging number of times of the energy storage unit may also be reduced to a certain extent, so that the performance of the energy storage system is improved and the service life of the energy storage system is prolonged.

In a possible implementation mode, the step of determining an energy management strategy of the energy storage system includes: in a case where there is no undervoltage energy storage unit in the energy storage system and the discharge power of the renewable energy system is less than the discharge power of the power grid, controlling the energy storage system to be discharged towards the power grid.

According to the energy management strategy of the energy storage system provided in the embodiments of the present application, in a case where there is no undervoltage energy storage unit in the energy storage system, the energy generation system is preferably utilized to be discharged towards the power grid, and energy insufficient is provide by the energy storage system to the power grid. When the energy storage system is controlled to be discharged towards the power grid, the status information of the energy storage system, the discharge power of the energy generation system and the discharge power of the power grid are comprehensively considered, and energy management of the energy storage system can be performed reasonably, so that the performance of the energy storage system is improved, and the service life of the energy storage system is prolonged.

In a possible implementation mode, the step of controlling the energy storage system to be discharged towards the power grid includes: in a case where there is a fourth energy storage unit in the energy storage system, discharging the fourth energy storage unit, where the fourth energy storage unit is an energy storage unit, the time of which at the preset DOC interval is longer than or equal to a preset time.

According to the energy management strategy of the energy storage system provided in the embodiments of the present application, when the energy storage system is discharged towards the power grid, the energy storage unit at the preset DOD interval for a long time is preferably discharged, so that the problem of inaccurate SOC caused by the long time of the energy storage system at the DOD interval may be avoided, over-charge and over-discharge of the energy storage unit caused by inaccurate SOC may be avoided, and the performance of the energy storage system is improved and the service life of the energy storage system is prolonged.

In a possible implementation mode, the step of controlling the energy storage system to be discharged towards the power grid includes: in a case where there is a fifth energy storage unit in the energy storage system, discharging the fifth energy storage unit, where the fifth energy storage unit is an energy storage unit except for the fourth energy storage unit, with an SOC being greater than or equal to a first discharging threshold, and a discharging priority of the fifth energy storage unit is inferior to that of the fourth energy storage unit.

According to the energy management strategy of the energy storage system provided in the embodiments of the present application, the SOC of the energy storage unit needs to be further considered. When other energy storage units except for the energy storage unit at the preset DOD interval for the long time in the energy storage system are discharged, the energy storage units with relatively less SOC can be preferably discharged, so that the energy storage units with relatively great SOC may be preferably discharged, the energy storage units with relatively great SOC are prevented from being over-discharged, and the performance of the energy storage system is improved and the service of the energy storage system is prolonged.

In a possible implementation mode, the step of controlling the energy storage system to be discharged towards the power grid in order includes: in a case where there is a sixth energy storage unit in the energy storage system, discharging the sixth energy storage unit, where the sixth energy storage unit is an energy storage unit except for the fourth energy storage unit and the fifth energy storage unit, with an SOC being greater than or equal to the second discharging threshold and the second discharging threshold being less than the first discharging threshold, and a charging priority of the sixth energy storage unit is inferior to that of the fourth energy storage unit or the fifth energy storage unit.

According to the energy management strategy of the energy storage system provided in the embodiments of the present application, when the energy storage system is discharged, the time information of the energy storage unit at the preset DOD interval and the SOC information of the energy storage unit are comprehensively considered, so that the energy storage system can be more reasonably discharged towards the power grid, a situation of over-charge or over-discharge of the energy storage unit may be avoided, and the charging number of times of the energy storage unit may also be reduced to a certain extent, so that the performance of the energy storage system is improved and the service life of the energy storage system is prolonged.

In a possible implementation mode, the SOC of the undervoltage energy storage unit is less than or equal to a first undervoltage threshold.

In a possible implementation mode, in a case where the undervoltage energy storage unit is charged by utilizing the energy generation system or the dischargeable energy storage unit, the SOC of the undervoltage energy storage unit is less than or equal to the first undervoltage threshold; or in a case where the undervoltage energy storage unit is charged by utilizing the power grid, the SOC of the undervoltage energy storage unit is less than or equal to the first undervoltage threshold, and the second undervoltage threshold is less than the first undervoltage threshold.

According to the solution of the energy management o the energy storage unit provided in the embodiments of the present application, when the SOC of the undervoltage energy storage unit is less, the power grid can be utilized to charge the undervoltage energy storage unit. The charging economic factor is considered while the undervoltage energy storage unit is charged, and the charging cost of the undervoltage energy storage unit is reduced as far as possible on the premise of guaranteeing the performance and the service life of the energy storage system.

In a second aspect, provided is a device for controlling an energy storage system. The control device is coupled to the energy storage system, the energy storage system is coupled to an energy generation system, and the energy storage system includes a plurality of energy storage units. The control device includes: an acquisition unit, configured to acquire discharge power information of the energy generation system and status information of the energy storage system, the status information of the energy storage system including information of an undervoltage energy storage unit; and a control unit, configured to determine an energy management strategy of the energy storage system according to the discharge power information of the energy generation system and the status information of the energy storage system.

In a possible implementation mode, the control unit is specifically configured to: in a case where there is the undervoltage energy storage unit in the energy storage system and the discharge power of the energy generation system is greater than zero, charge the undervoltage energy storage unit by utilizing the energy generation system.

In a possible implementation mode, the status information of the energy storage system further includes discharge power information of a dischargeable energy storage unit, and the control unit is specifically configured to charge the undervoltage energy storage unit by utilizing the energy generation system and the dischargeable energy storage unit, where the discharge power of the energy generation system is less than a charging power of the undervoltage energy storage unit, and the discharge power of the dischargeable energy storage unit is greater than zero; or to charge the undervoltage energy storage unit by utilizing the energy generation system and a power grid, where the discharge power of the energy generation system is less than the charging power of the undervoltage energy storage unit, and the discharge power of the dischargeable energy storage unit is equal to zero.

In a possible implementation mode, the control unit is specifically configured to, in a case where there is the undervoltage energy storage unit in the energy storage system and the discharge power of the renewable energy is equal to zero, charge the undervoltage energy storage unit by utilizing the dischargeable energy storage unit and/or the power grid.

In a possible implementation mode, the status information of the energy storage system further includes discharge power information of the dischargeable energy storage unit, and the control unit is specifically configured to, in a case where the discharge power of the dischargeable energy storage unit is greater than zero, charge the undervoltage energy storage unit by utilizing the dischargeable energy storage unit; or in a case where the discharge power of the dischargeable energy storage unit is equal to zero, charge the undervoltage energy storage unit by utilizing the power grid.

In a possible implementation mode, the control unit is specifically configured to: in a case where there is no undervoltage energy storage unit in the energy storage system and the discharge power of the energy generation system is greater than the charge power of the power grid, charge the energy storage system by utilizing the energy generation system.

In a possible implementation mode, the status information of the energy storage system includes time information of the energy storage unit at a preset DOD interval, and the control unit is specifically configured to: in a case where there is a first energy storage unit in the energy storage system, charge the first energy storage unit, where the first energy storage unit is an energy storage unit, the time of which at the preset DOC interval is longer than or equal to a preset time.

In a possible implementation mode, the status information of the energy storage system includes SOC information of the energy storage unit, and the control unit is specifically configured to: in a case where there is a second energy storage unit in the energy storage system, charge the second energy storage unit, where the second energy storage unit is an energy storage unit except for the first energy storage unit, with an SOC being less than or equal to a first charging threshold, and a charging priority of the second energy storage unit is inferior to that of the first energy storage unit.

In a possible implementation mode, the control unit is specifically configured to: in a case where there is a third energy storage unit in the energy storage system, charge the third energy storage unit, where the third energy storage unit is an energy storage unit except for the first energy storage unit and the second energy storage unit, with an SOC being less than or equal to a second charging threshold and the second charging threshold being greater than the first charging threshold, and a charging priority of the third energy storage unit is inferior to that of the first energy storage unit or the second energy storage unit.

In a possible implementation mode, the control unit is specifically configured to: in a case where there is no undervoltage energy storage unit in the energy storage system and the power of the renewable energy system is less than the charge power of the power grid, control the energy storage system to be discharged towards the power grid.

In a possible implementation mode, the control unit is specifically configured to: in a case where there is a fourth energy storage unit in the energy storage system, discharge the fourth energy storage unit, where the fourth energy storage unit is an energy storage unit, the time of which at the preset DOC interval is longer than or equal to a preset time.

In a possible implementation mode, the control unit is specifically configured to: in a case where there is a fifth energy storage unit in the energy storage system, discharge the fifth energy storage unit, where the fifth energy storage unit is an energy storage unit except for the fourth energy storage unit, with an SOC being greater than or equal to a first discharging threshold, and a discharging priority of the fifth energy storage unit is inferior to that of the fourth energy storage unit.

In a possible implementation mode, the control unit is specifically configured to: in a case where there is a sixth energy storage unit in the energy storage system, discharge the sixth energy storage unit, where the sixth energy storage unit is an energy storage unit except for the fourth energy storage unit and the fifth energy storage unit, with an SOC being greater than or equal to the second discharging threshold and the second discharging threshold being less than the first discharging threshold, and charging and discharging priorities of the sixth energy storage unit are inferior to those of the fourth energy storage unit or the fifth energy storage unit.

In a possible implementation mode, the SOC of the undervoltage energy storage unit is less than or equal to a first undervoltage threshold.

In a possible implementation mode, in a case where the undervoltage energy storage unit is charged by utilizing the energy generation system or the dischargeable energy storage unit, the SOC of the undervoltage energy storage unit is less than or equal to the first undervoltage threshold; or in a case where the undervoltage energy storage unit is charged by utilizing the power grid, the SOC of the undervoltage energy storage unit is less than or equal to the first undervoltage threshold, and the second undervoltage threshold is less than the first undervoltage threshold.

In a third aspect, provided is an energy storage system, coupled to an energy generation system, where the energy storage system includes a plurality of energy storage units and the control device in the second aspect and any one implementation mode in the second aspect.

In a fourth aspect, provided is a device for controlling an energy storage system, including a memory and a processor, where the memory is configured to store an instruction, and the processor is configured to read the instruction and to execute the method in the first aspect and any one implementation mode in the first aspect.

In a fifth aspect, provided is a chip, including a processor, configured to call and run a computer program in the memory, such that a device installed with the chip executes the method in the first aspect and any one implementation mode in the first aspect.

In a sixth aspect, provided is a computer program. When the computer program is executed by the computer, the computer implements the method in the first aspect and any one implementation mode in the first aspect.

In a seventh aspect, provided is a computer readable storage medium. The computer readable storage medium is configured to store the computer program. When the computer program is executed by the computer, the computer implements the method in the first aspect and any one implementation mode in the first aspect.

In an eighth aspect, provided is a computer program product, including a computer program instruction. When the computer program instruction is executed, the computer implements the method in the first aspect and any one implementation mode in the first aspect.

### BRIEF DESCRIPTION OF DRAWINGS

FIG. 1 is a schematic architecture diagram of an application scenario of an energy storage system applicable to the embodiments of the present application;
FIG. 2 is a schematic architecture diagram of an optical storage direct current coupling system applicable to the embodiments of the present application;
FIG. 3 is a schematic flowchart of a method for controlling an energy storage system provided in the embodiments of the present application;
FIG. 4 is a schematic flowchart of a method for controlling an energy storage system provided in the embodiments of the present application;
FIG. 5 is a schematic flowchart of a method for controlling an energy storage system provided in the embodiments of the present application;
FIG. 6 is a schematic block diagram of a device for controlling an energy storage system provided in the embodiments of the present application; and
FIG. 7 is another schematic block diagram of the device for controlling an energy storage system provided in the embodiments of the present application.

### DETAILED DESCRIPTION OF THE EMBODIMENTS

The following further describes the implementations of the present application in detail with reference to the drawings and embodiments. Detailed description of the following embodiments and drawings are used to illustratively state the principles of the present application, but not to limit the scope of the present application, that is, the present application is not limited to the embodiments described.

Unless otherwise defined, all technical and scientific terms used in the application are the same with meaning usually understood by those skilled in the art of the application. Terms used in the description of the application are merely to describe specific embodiments rather than limit the application. The terms "include" and "have" and any deformation thereof in the description, claims and drawings of the application are intended to cover non-exclusive inclusion. The terms "first", "second", and so on in the description and claims or accompanying drawings of the present application are intended to distinguish different objects, but not to describe particular sequences or primary-secondary relationship.

Location words in the description below all are directions shown in drawings and do not limit the specific structure of the present application. In the description of the present application, it is to be further noted that unless otherwise specified and defined, the terms "connecting" and "connection" shall be understood in a broad sense, for example, "connecting" and "connection" may be either fixed connection or detachable connection or integrated connection; may be either direct connection and may be either indirect connection via an intermediation. Those of ordinary skill in the art may understand specific meaning of the terms in the present application under specific circumstances.

The "embodiments" in the application mean that specific features, structures or characteristics described in combination with the embodiments may be included in at least one embodiment of the application. The phrase appearing at each position of the description does not necessarily indicate the same embodiment and it is not an exclusively independent or alternative embodiment of other embodiments. Those skilled in the art explicitly and implicitly understand that the embodiments described herein may combine with other embodiments.

At present, with the rapid development of the new energy industry, a plenty of renewable energy systems such as wind power systems and photovoltaic systems access to a power grid. The renewable energy systems have the problem of great power fluctuation, which will cause severe fluctuation of the voltage and the frequency of the power grid, affecting the stability of the power grid.

The renewable energy systems are connected to an energy storage system, which may effectively alleviate the fluctuation of the output power. When the energy outputted by the renewable energy systems is too large, the renewable energy systems may be controlled to charge the energy storage system, so that energy waste may be avoided. In a case where the energy generated by the renewable energy systems is insufficient, the energy storage system may be controlled to be discharged, so as to guarantee a smooth output of the total power. The charge and discharge modes frequently used by the energy storage system refer to distribute power according the SOC to charge and discharge all batteries in the energy storage system during charging and discharging every time, which affects the performance and the service life of the energy storage system.

In view of this, the present application provides a solution for controlling an energy storage system, which may determine the energy management strategy of the energy storage system according to the acquired discharge power information of the renewable energy system and the status information of the energy storage system, where the status information of the energy storage system includes information of the undervoltage energy storage unit. By comprehensively considering the discharge power information of the renewable energy system and the status information of the undervoltage energy storage unit included in the energy storage system, an energy management strategy of the energy storage system may be determined more reasonably, and energy management of the energy storage system can be performed flexibly, and therefore, the performance of the energy storage system is improved, and the service life of the energy storage system is prolonged.

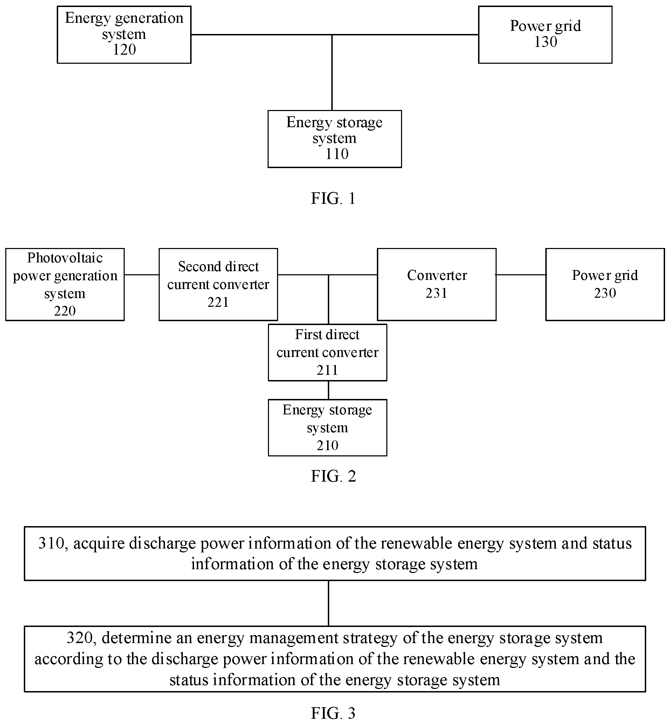

FIG. 1 is an architecture diagram of an application scenario of an energy storage system applicable to the embodiments of the present application.

As shown in FIG. 1, an energy storage system 110 may be connected to an energy generation system 120. Optionally, the energy storage system 110 may further be connected to a power grid 130.

The energy generation system 120 may convert solar energy, wind energy, nuclear energy and the like into electric energy; the energy storage system 110 stores electric energy inside; and the energy generation system 120 and the energy storage system 110 both are connected to the power grid 130 to output power to the power grid 130. Optionally, the energy generation system 120 may output power to the power grid 130 independently, the energy storage system 110 may output power to the power grid 130 independently, and the energy storage system 110 and the energy generation system 120 jointly output power to the power grid 130.

In the embodiments of the present application, the energy generation system 120 and the power grid 130 may further output power to the energy storage system 110. Optionally, the energy generation system 120 may output power to the energy storage system 110 independently, the power grid 130 may output power to the energy storage system 110 independently, and the energy generation system 120 and the power grid 130 jointly output power to the energy storage system 110.

In the embodiments of the present application, the energy storage system 110 may include a plurality of energy storage units. Optionally, each energy storage unit may include at least one battery. A battery management system (BMS) is designed in each energy storage unit to monitor battery information such as SOC, temperature and current of the battery, and performs real-time information interaction with an upper layer energy management system (EMS), so that energy management of the whole energy storage system is realized.

Optionally, in the embodiments of the present application, the energy generation system 120 may be a renewable energy system such as a wind power generation system, a solar power generation system or a tidal energy power generation system. Optionally, the energy generation system 120 may be a nuclear power generation system, a thermal power generation system or a hydroelectric power generation system. For example, the energy generation system 120 may be a photovoltaic power generation system. For further example, the energy generation system 120 may be a power generation system combining the wind power generation system with the thermal power generation system. The present application does not limit the power generation form of the energy generation system 120.

Optionally, in the embodiments of the present application, the power grid 130 may be a power distribution network, a regional power grid, and a power supply grid, which is not limited herein.

Optionally, in the embodiments of the present application, the power grid 130 may be replaced by a user side power consumption device, and the user side power consumption device may output power to the energy storage system 110. Optionally, the user side power consumption device may receive the power outputted by the energy storage system 110 and/or the energy generation system 120. Optionally, the energy storage system 110 may receive the power outputted by the energy generation system 120.

It shall be understood that in the embodiments of the present application, connection of the energy storage system to the energy generation system, connection of the energy generation system to the power grid, and connection of the energy generation system to the power grid may be understood as coupling of the energy storage system to the energy generation system, coupling of the energy storage system to the power grid, and coupling of the energy generation system to the power grid.

FIG. 2 is a schematic flowchart of an optical storage direct current coupling system applicable to the embodiments of the present application. An application scenario of the energy storage system is exemplarily introduced below in combination with FIG. 2 when the energy generation system is the photovoltaic power generation system. The photovoltaic power generation system 220 in FIG. 2 may be the energy generation system 120 in FIG. 1, and the energy storage system 210 in FIG. 2 may be the energy storage system 110 in FIG. 1.

In an optional embodiment of the present application, the energy storage system 210 may be connected to one end of a first direct current converter 211, the other end of the first direct current converter 211 is connected to one end of a second direct current converter 221 and one end of a converter 231 such as a bidirectional converter, the other end of the second direct current converter 221 is connected to the photovoltaic power generation system 220, and the other end of the converter 231 is connected to the power grid 230.

In an optional embodiment of the present application, the output power of the second direct current converter 221 is provided by the photovoltaic power generation system 220, and the second direct current converter 221 may control the magnitude of the output power of the photovoltaic power generation system 220. The output power of the first direct current converter 211 is provided by the photovoltaic power generation system 210. The converter 231 may receive the power outputted by the first direct current converter 211 and the second direct current converter 221. Optionally, the first direct current converter 211 may receive the power outputted by the second direct current converter 221 and the converter 231.

In an optional embodiment of the present application, the energy storage system 210, the photovoltaic power generation system 220 and the power grid 230 may be connected through alternating current modules. The power grid 230 may receive the output power of the energy storage system 210 and the photovoltaic power generation system 220 through the alternating current modules. Optionally, the energy storage system 210 may receive the power outputted by the photovoltaic power generation system 220 and the power grid 230.

In an optional embodiment of the present application, the energy storage system 210 may include a plurality of energy storage units. The charge and discharge power of each energy storage unit may be the minimum of the charge and discharge power allowed by the energy storage unit and the charge and discharge power allowed by the first direct current converter 211. The charge power of a power grid side 230 may be the minimum one of the charge power allowed by the power grid side issued by the EMS and the charge power allowed by the converter 231. The discharge power of the power grid side may be the minimum one of the discharge power allowed by the power grid side issued by the EMS, the discharge power allowed by the converter 231 and the charge power of the energy storage system 210.

It shall be understood that the charge power allowed by the converter 231 may be understood as the power allowed by the converter when the power is outputted to the power grid 230. Similarly, the discharge power allowed by the converter 231 may be understood as the power allowed by the converter 231 when the power grid 230 outputs power to the energy storage system 210.

FIG. 3 is a schematic flowchart of a method for controlling an energy storage system provided in the embodiments of the present application.

The energy storage system may be the energy storage system 110 in FIG. 1 or the energy storage system 210 in FIG. 2. The method for controlling the energy storage system provided in the embodiments of the present application is exemplarily introduced below as the energy storage system is coupled to a renewable energy system.

310, discharge power information of the renewable energy system and status information of the energy storage system are acquired.

Coupling of the energy storage system to the renewable energy system may also be understood as connection of the energy storage system to the renewable energy system. By connecting the energy storage system to the renewable energy system, the renewable energy system may output power to the energy storage system, i.e., the renewable energy system may charge the energy storage system.

The energy storage system may include a plurality of energy storage units. Optionally, by connecting the energy storage system to the renewable energy system, the renewable energy system may output power to the energy storage system.

The status information of the energy storage system includes information of an undervoltage energy storage unit. The undervoltage energy storage unit may be determined in different ways, for example, the undervoltage energy storage unit is an energy storage unit with an SOC being less than or equal to an undervoltage threshold; and for further example, the undervoltage energy storage unit is an energy storage, with a voltage provided being less than or equal to a rated voltage. Information of the undervoltage energy storage unit in the status information of the energy storage system may indicate whether there is the undervoltage energy storage unit in the energy storage system.

320, an energy management strategy of the energy storage system is determined according to the discharge power information of the renewable energy system and the status information of the energy storage system.

According to a solution for controlling an energy storage unit provided in the embodiments of the present application, the energy management strategy of the energy storage system may be determined according to the acquired discharge power information of the renewable energy system and the status information of the undervoltage energy storage unit included in the energy storage system. The solution provided by the present application comprehensively considers the discharge power information of the renewable energy system and the status information of the undervoltage energy storage unit included in the energy storage system, so that the energy management strategy of the energy storage system can be determined more reasonably, and energy management of the energy storage system can be performed flexibly, and therefore, the performance of the energy storage system is improved, and the service life of the energy storage system is prolonged.

Optionally, in the embodiments of the present application, in a case where there is the undervoltage energy storage unit in the energy storage system and the discharge power of the renewable energy system is greater than zero, the renewable energy system is controlled to charge the undervoltage energy storage unit.

Since the SOC of the undervoltage energy storage unit is lower than an undervoltage threshold, the voltage of the energy storage unit is lower than a rated voltage. If the undervoltage energy storage unit is continuously discharged, the energy storage unit is over-discharged, which affects the performance and the service life of the energy storage system.

Optionally, in the embodiment, in a case where there is the undervoltage energy storage unit in the energy storage system and the discharge power of the renewable energy system is greater than zero, if the discharge power of the renewable energy is greater than or equal to the charge power of the undervoltage energy storage unit, the renewable energy system may be controlled to charge the undervoltage energy storage unit.

According to the solution for controlling an energy storage system provided in the embodiments of the present application, in a case where there is the undervoltage energy storage unit in the energy storage system, the undervoltage energy storage unit is preferably charged, so that over-discharge due to continuous discharge of the undervoltage energy storage unit can be avoided. Meanwhile, the undervoltage energy storage unit is charged by preferably utilizing the renewable energy system, so that the charging cost can be saved to a certain extent.

Optionally, in the embodiments of the present application, the status information of the energy storage system further includes information of a dischargeable energy storage unit, and the step of charging the undervoltage energy storage unit by utilizing the renewable energy system in a case where there is the undervoltage energy storage unit in the energy storage system and the discharge power of the renewable energy system is greater than zero includes: charging the undervoltage energy storage unit by utilizing the renewable energy system and the dischargeable energy storage unit, where the discharge power of the renewable energy system is greater than zero but less than a charging power of the undervoltage energy storage unit, and the discharge power of the dischargeable energy storage unit is greater than zero; or charging the undervoltage energy storage unit by utilizing the renewable energy system and the power grid, where the discharge power of the renewable energy system is greater than zero but less than the charging power of the undervoltage energy storage unit, and the discharge power of the dischargeable energy storage unit is equal to zero.

The dischargeable energy storage unit is an energy storage unit with an SOC being greater than or equal to the discharge threshold. When the SOC of the energy storage unit is greater than or equal to the discharge threshold, the energy storage unit may be discharged.

Optionally, in the embodiments of the present application, in a case where the discharge power of the dischargeable energy storage unit is greater than zero and the total discharge power of the renewable energy system and the dischargeable energy storage unit is greater than or equal to the discharge power of the undervoltage energy storage unit, the renewable energy system and the dischargeable energy storage unit may be controlled to charge the undervoltage energy storage unit.

Optionally, in the embodiments of the present application, in a case where the discharge power of the dischargeable energy storage unit is greater than zero and the total discharge power of the renewable energy system and the dischargeable energy storage unit is less than the discharge power of the undervoltage energy storage unit, in addition to controlling the renewable energy system and the dischargeable energy storage unit to charge the undervoltage energy storage unit, the undervoltage energy storage unit may further be charged by utilizing the power grid.

Optionally, in the embodiments of the present application, in a case where the discharge power of the dischargeable energy storage unit is equal to zero, in addition to controlling the renewable energy system to charge the undervoltage energy storage unit, the undervoltage energy storage unit may further be charged by utilizing the power grid.

According to the solution for controlling an energy storage system provided in the embodiments of the present application, in a case where the discharge power of the renewable energy system cannot satisfy the charge power requirement of the undervoltage energy storage unit, the undervoltage energy storage unit may further be charged by utilizing the dischargeable energy storage unit and/or the power grid. Thus, the charge power requirement of the undervoltage energy storage unit can be satisfied as far as possible, and the undervoltage energy storage unit may be prevented from being over-discharged, so that the performance of the energy storage system is improved, and the service life of the energy storage system is prolonged.

Optionally, in the embodiments of the present application, in a case where there is the undervoltage energy storage unit in the energy storage system and the discharge power of the renewable energy system is equal to zero, the undervoltage energy storage unit may be charged by utilizing the dischargeable energy storage unit and/or the power grid.

In the embodiment, since the renewable energy system generates power intermittently, in a case where the renewable energy system has not energy outputted, the discharge power of the renewable energy system is equal to zero. In this case, the undervoltage energy storage unit may be charged by utilizing the dischargeable energy storage unit and/or the power grid.

According to the solution for controlling an energy storage unit provided in the embodiments of the present application, when the renewable energy system has no energy generated, the undervoltage energy storage unit may be charged by utilizing the dischargeable energy storage unit and/or the power grid, and the undervoltage energy storage unit can be prevented from being over-discharged, so that the performance of the energy storage system is improved, and the service life of the energy storage system is prolonged.

Optionally, in the embodiments of the present application, the status information of the energy storage system includes the discharge power information of the dischargeable energy storage unit. In a case where there is the undervoltage energy storage unit in the energy storage system, the discharge power of the renewable energy system is equal to zero, and the discharge power of the dischargeable energy storage unit is greater than zero, the undervoltage energy storage unit may be charged by utilizing the dischargeable energy storage unit; or, in a case where there is the undervoltage energy storage unit in the energy storage system, the discharge power of the renewable energy system is equal to zero, and the discharge power of the dischargeable energy storage unit is equal to zero, the undervoltage energy storage unit may be charged by utilizing the power grid.

Optionally, in the embodiment, in a case where the discharge power of the dischargeable energy storage unit is greater than or equal to the charge power of the undervoltage energy unit, the undervoltage energy unit may be charged by only utilizing the dischargeable energy storage unit.

Optionally, in the embodiment, in a case where the discharge power of the dischargeable energy storage unit is greater than zero but less than the charge power of the undervoltage energy storage unit, in addition to controlling the dischargeable energy storage unit to charge the undervoltage energy storage unit, the undervoltage energy storage unit may further be charged by utilizing the power grid.

Optionally, in the embodiment, in a case where the discharge power of the dischargeable energy storage unit is equal to zero, the undervoltage energy storage unit may further be charged by only utilizing the power grid.

According to the solution for controlling an energy storage system provided in the embodiments of the present application, it is guaranteed that the undervoltage energy storage unit is charged as far as possible, and the undervoltage energy storage unit is prevented from being over-discharged, so that the performance of the energy storage system is improved, and the service life of the energy storage system is prolonged. On the other hand, when the undervoltage energy storage unit is charged, the charging priority is considered fully. In a case where the energy generation system has no energy outputted, the dischargeable energy storage unit is utilized preferably, and if there is no dischargeable energy storage unit in the energy storage system, the power grid is then utilized, so that the charging cost of the undervoltage energy storage unit can be lowered as far as possible.

Optionally, in the embodiments of the present application, in a case where there is no undervoltage energy unit in the energy storage system and the power of the renewable energy system is greater than or equal to the charge power of the power grid, the renewable energy system is controlled to charge the energy storage system.

There is no undervoltage energy storage unit in the energy storage system, which may include various circumstances. For example, while the information of the undervoltage energy storage unit is acquired in the status information of the energy storage system, there is the undervoltage energy storage unit in the energy storage system. After the undervoltage energy storage unit is charged by utilizing the renewable energy system, the dischargeable energy storage unit or the power grid, the undervoltage energy storage unit is no longer in an undervoltage status. For further example, when the information of the undervoltage energy storage unit in the status information of the energy storage system is acquired, there is no undervoltage energy storage unit in the energy storage system.

In the embodiment, in a case where there is no undervoltage energy storage unit in the energy storage system, the renewable energy system may preferably output power to the power grid, and the residual power of the renewable energy system may be outputted to the energy storage system, i.e., the renewable energy system is controlled to charge the energy storage unit.

According to the solution for controlling an energy storage system provided in the embodiments of the present application, when the energy management strategy of the energy storage system is determined, the status information of the energy storage system, the discharge power of the energy generation system and the discharge power of the power grid are comprehensively considered, and energy management of the energy storage system can be performed reasonably, so that the performance of the energy storage system is improved, and the service life of the energy storage system is prolonged.

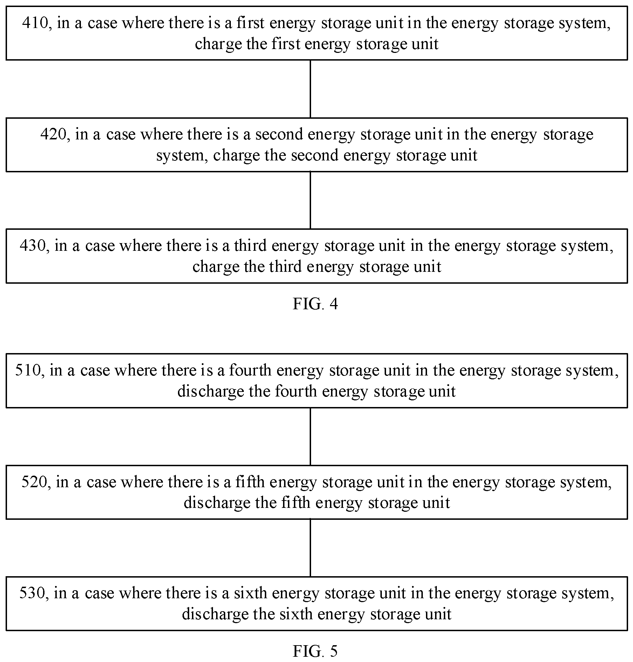

FIG. 4 is a schematic flowchart of a method for controlling an energy storage system provided in the embodiments of the present application. A method for controlling the renewable energy system to charge the energy storage system is exemplarily introduced below in combination with FIG. 4.

410, in a case where there is a first energy storage unit in the energy storage system, the first energy storage unit is charged.

Optionally, in the embodiments of the present application, the first energy storage unit is an energy storage unit with a time at a preset depth of discharge (DOD) interval being longer than or equal to a preset time.

In the embodiment, the status information of the energy storage system further includes time information of the energy storage unit at the preset DOD interval.

The energy storage unit may be charged and discharged at the preset DOD interval, and the preset DOD interval may be set within a range of a full discharge (full discharge) status and a full charge (full charge) status of the energy storage unit. An SOC value of the energy storage unit in the full discharge status is SOCₘᵢₙ, an SOC value thereof in the full discharge status is SOCₘₐₓ, a lower limit of the preset DOD interval is SOCDₘᵢₙ, and an upper limit of the preset DOD interval is SOCDₘₐₓ, then SOCₘᵢₙ≤SOCDₘᵢₙ<SOCDₘₐₓ≤SOCₘₐₓ.

If the energy storage unit is charged and discharged at the preset DOD interval for a long time, the SOC of the energy storage unit is easily inaccurate, so that the energy storage unit is over-charged or over-discharged due to inaccurate SOC. Therefore, the renewable energy system may be utilized to charge the first energy storage unit which is charged and discharged at the preset DOD interval for a long time. In a case where the energy of the renewable energy system is enough, the first energy storage unit may be charged to the full charge status.

According to the solution for controlling an energy storage system provided in the embodiments of the present application, when the energy storage system is charged, the energy storage unit at the preset DOD interval for a long time is preferably charged, so that the problem of inaccurate SOC caused by the long time of the energy storage system at the DOD interval may be avoided, over-charge and over-discharge caused by inaccurate SOC may be avoided, and the performance of the energy storage system is improved and the service life of the energy storage system is prolonged.

420, in a case where there is a second energy storage unit in the energy storage system, the second energy storage unit is charged.

Optionally, in the embodiments of the present application, the second energy storage unit is an energy storage unit except for the first energy storage unit, with an SOC being less than or equal to a first charging threshold, and a charging priority of the second energy storage unit is inferior to that of the first energy storage unit.

Optionally, in the embodiment, the status information of the energy storage system further includes SOC information of the energy storage unit.

The second energy storage unit may also be understood as the energy storage unit in other energy storage units except for the first energy storage unit with the SOC value being relatively less. The upper limit value of the SOC of the second energy storage unit is dependent on the magnitude of the first charging threshold. Optionally, in the embodiment, the first charging threshold SOC_{char1} may be set within a range at the preset DOD interval, i.e., SOC_{Dmin}≤SOC_{charg1}≤SOC_{Dmax}. Optionally, in the embodiment, the first charging threshold SOC_{charg1} may be set without the range at the preset DOD interval, i.e., SOC_{charg1}<SOC_{Dmin} or SOC_{charg1}>SOC_{Dmax}.

Optionally, in the embodiments of the present application, in a case where there is the first energy storage unit and the second energy storage unit in the energy storage system, the first energy storage unit is preferably charged when the renewable energy system is controlled to charge the energy storage system. In a case where three is residual power when the renewable energy system charges the first energy storage unit, the second energy storage unit is charged by utilizing the residual power.

Optionally, in the embodiment, in a case where there is no first energy storage unit and there is the second energy storage unit in the energy storage system, the second energy storage unit is preferably charged when the renewable energy system is controlled to charge the energy storage system.

According to the solution for controlling an energy storage system provided in the embodiments of the present application, the SOC of the energy storage unit needs to be further considered. When other energy storage units except for the first energy storage unit at the preset DOD interval for the long time in the energy storage system are charged, the energy storage units with relatively less SOC may be preferably charged, so that the energy storage units with less SOC can be preferably charged, the energy storage units with less SOC are prevented from being over-discharged, and the performance of the energy storage system is improved and the service of the energy storage system is prolonged.

430, in a case where there is a third energy storage unit in the energy storage system, the third energy storage unit is charged.

Optionally, in the embodiments of the present application, the third energy storage unit is an energy storage unit except for the first energy storage unit and the second energy storage unit, with an SOC being less than or equal to a second charging threshold, and a charging priority of the third energy storage unit is inferior to that of the first energy storage unit or the second energy storage unit.

In a case where the SOC of the energy storage unit is less than or equal to the second charging threshold, the energy storage unit may be charged. The energy storage unit which may be charged may also be known as a chargeable energy storage unit. On the contrary, the energy storage unit may not be charged. The third energy storage unit may also be understood as the energy storage unit in chargeable energy storage units except for the first energy storage unit with the SOC value being relatively great.

Optionally, in the embodiments of the present application, in a case where there is the first energy storage unit, the second energy storage unit and the third energy storage unit in the energy storage system, the first energy storage unit is preferably charged when the renewable energy system is controlled to charge the energy storage system, then the second energy storage unit is charged, and finally, the third energy storage unit is charged. That is to say, in a case where the first energy storage unit is charged and three is residual power in the renewable energy system, the second energy storage unit is charged by utilizing the residual power. In a case where the first energy storage unit and the second energy storage unit are charged by utilizing the renewable energy system, if there is residual power in the renewable energy system, the third energy storage unit is charged by utilizing the residual power.

Optionally, in the embodiments of the present application, in a case where there is the first energy storage unit and the third energy storage unit and there is no second energy storage unit in the energy storage system, the first energy storage unit is preferably charged when the renewable energy system is controlled to charge the energy storage system, and then the third energy storage unit is charged. That is to say, when the first energy storage unit is charged by utilizing the renewable energy system, in a case where there is the residual power in the renewable energy system, the third energy storage unit is charged by utilizing the residual power.

Optionally, in the embodiments of the present application, in a case where there is the second energy storage unit and the third energy storage unit and there is no first energy storage unit in the energy storage system, the second energy storage unit is preferably charged when the renewable energy system is controlled to charge the energy storage system, and then the third energy storage unit is charged. That is, when the second energy storage unit is charged by utilizing the renewable energy system, if there is the residual power in the renewable energy system, the third energy storage unit is charged by utilizing the residual power.

According to the solution for controlling an energy storage system provided in the embodiments of the present application, the time information of the energy storage unit at the preset DOD interval and the SOC information of the energy storage unit are fully considered, so that the renewable energy system can be controlled to charge the energy storage unit in a certain priority order. The energy storage system is charged reasonably, the problem of over-charge or over-discharge of the energy storage unit caused by inaccurate SOC of the energy storage unit can be avoided, and the charging number of times of the energy storage unit may also be reduced to a certain extent, so that the performance of the energy storage system is improved and the service life of the energy storage system is prolonged.

Optionally, in the embodiments of the present application, in a case where there is no undervoltage energy storage unit in the energy storage system and the power of the renewable energy system is less than the charge power of the power grid, the energy storage system is controlled to be discharged towards the power grid.

There is no undervoltage energy storage unit in the energy storage system, which may include various circumstances. Optionally, while the information of the undervoltage energy storage unit is acquired in the status information of the energy storage system, there is the undervoltage energy storage unit in the energy storage system. After the undervoltage energy storage unit is charged by utilizing the renewable energy system, the dischargeable energy storage unit or the power grid, the undervoltage energy storage unit is no longer in an undervoltage status. Optionally, when the information of the undervoltage energy storage unit in the status information of the energy storage system is acquired, there is no undervoltage energy storage unit in the energy storage system.

In the embodiment, in a case where there is no undervoltage energy storage unit in the energy storage system, the renewable energy system is preferably controlled to output power to the power grid. When the output power of the renewable energy system cannot satisfy the requirement of the power grid, power may further be outputted to the power grid by utilizing the energy storage system, i.e., the energy storage system is discharged to the power grid.

According to the solution for controlling an energy storage system provided in the embodiments of the present application, when the energy management strategy of the energy storage system is determined, the status information of the energy storage system, the discharge power of the energy generation system and the discharge power of the power grid are comprehensively considered, and energy management of the energy storage system can be performed reasonably, so that the performance of the energy storage system is improved, and the service life of the energy storage system is prolonged.

FIG. 5 is a schematic flowchart of a method for controlling an energy storage system provided in the embodiments of the present application. A method for controlling the energy storage system to be discharged towards the power grid is exemplarily introduced below in combination with FIG. 5.

510, in a case where there is a fourth energy storage unit in the energy storage system, the fourth energy storage unit is discharged.

Optionally, in the embodiments of the present application, the fourth energy storage unit is an energy storage unit with a time at a preset DOD interval being longer than or equal to a preset time.

Optionally, in the embodiment, the status information of the energy storage system further includes time information of the energy storage unit at the preset DOD interval.

The energy storage unit may be charged and discharged at the preset DOD interval, and the preset DOD interval may be set within a range of a full discharge (full discharge) status and a full charge (full charge) status of the energy storage unit. An SOC value of the energy storage unit in the full discharge status is SOCₘᵢₙ, an SOC value thereof in the full discharge status is SOCₘₐₓ, a lower limit of the preset DOD interval is SOCDₘᵢₙ, and an upper limit of the preset DOD interval is SOCDₘₐₓ, then SOCₘᵢₙ≤SOCDₘᵢₙ<SOCDₘₐₓ≤SOCₘₐₓ.If the energy storage unit is charged and discharged at the preset DOD interval for a long time, the SOC of the energy storage unit is easily inaccurate, so that the energy storage unit is over-charged or over-discharged due to inaccurate SOC. Therefore, when the energy storage system is controlled to be discharged towards the power grid, the energy storage system may be preferably discharged to the fourth energy storage unit.

Optionally, in the embodiment, the fourth energy storage unit may be discharged to the full discharge status.

According to the solution for controlling an energy storage system provided in the embodiments of the present application, when the energy storage system is controlled to be discharged towards the power grid, the energy storage unit at the preset DOD interval for a long time is preferably discharged, so that the problem of inaccurate SOC caused by the long time of the energy storage system at the DOD interval may be avoided, over-charge and over-discharge caused by inaccurate SOC may be avoided, and the performance of the energy storage system is improved and the service life of the energy storage system is prolonged.

S520, in a case where there is a fifth energy storage unit in the energy storage system, the fifth energy storage unit is discharged.

Optionally, in the embodiments of the present application, the fifth energy storage unit is an energy storage unit except for the first energy storage unit, with an SOC being greater than or equal to a first charging threshold, and a charging priority of the fifth energy storage unit is inferior to that of the fourth energy storage unit.

The fifth energy storage unit may also be understood as an energy storage unit in the energy storage system except for the fourth energy storage unit with the SOC value being relatively great. The lower limit value of the SOC of the fifth energy storage unit is dependent on the magnitude of the first discharging threshold. Optionally, the first discharging threshold SOC_{Discharg1} may be set within a range at the preset DOD interval, i.e., SOC_{Dmin}≤SOC_{Discharg1}≤SOC_{Dmax.}Optionally, the first discharging threshold may be set without the range at the preset DOD interval, i.e., SOC_{Discharg1} < SOC_{Dmin} or SOC_{Discharg1} > SOC_{Dmax}.

Optionally, in the embodiment, in a case where there are the fourth energy storage unit and the fifth energy storage unit in the energy storage system, when the energy storage system is discharged, the fourth energy storage unit is preferably controlled to be discharged towards the power grid, and then the fifth energy storage unit is controlled to be discharged towards the power grid. In other words, when the fourth energy storage unit is controlled to be discharged towards the power grid, if the discharge power of the renewable energy system and the fourth energy storage unit still cannot satisfy the charge power requirement of the power grid, the fifth energy storage unit may also be controlled to be discharged towards the power grid.

Optionally, in the embodiment, in a case where there is no fourth energy storage unit and there is the fifth energy storage unit in the energy storage system, when the energy storage system is controlled to be discharged towards the power grid, the fifth energy storage unit is preferably controlled to be discharged towards the power grid.

According to the solution for controlling an energy storage system provided in the embodiments of the present application, the SOC of the energy storage unit needs to be further considered. When other energy storage units except for the energy storage unit at the preset DOD interval for the long time in the energy storage system are discharged, the energy storage units with relatively less SOC can be preferably discharged, so that the energy storage units with relatively great SOC may be preferably discharged, the energy storage units with relatively great SOC are prevented from being over-discharged, and the performance of the energy storage system is improved and the service of the energy storage system is prolonged.

530, in a case where there is a sixth energy storage unit in the energy storage system, the sixth energy storage unit is discharged.

Optionally, in the embodiment, the sixth energy storage unit is an energy storage unit except for the fourth energy storage unit and the fifth energy storage unit, with an SOC being greater than or equal to a second discharging threshold and the second discharging threshold being less than the first discharging threshold, and a charging priority of the sixth energy storage unit is inferior to that of the fourth energy storage unit or the fifth energy storage unit.

In a case where the SOC of the energy storage unit is greater than or equal to the second discharging threshold, the energy storage unit may be discharged. The energy storage unit which may be discharged may also be known as a dischargeable energy storage unit. On the contrary, the energy storage unit may not be discharged. The sixth energy storage unit may also be understood as an energy storage unit in dischargeable energy storage units except for the fourth energy storage unit with the SOC value being relatively less.

Optionally, in the embodiments of the present application, in a case where there is the fourth energy storage unit, the fifth energy storage unit and the sixth energy storage unit in the energy storage system, when the energy storage system is controlled to be discharged, the fourth energy storage unit is preferably discharged, then the fifth energy storage unit is discharged, and finally, the sixth energy storage unit is discharged. That is to say, when the fourth energy storage unit is controlled to be discharged towards the power grid, if the discharge power of the renewable energy system and the fourth energy storage unit still cannot satisfy the charge power requirement of the power grid, the fifth energy storage unit may also be controlled to be discharged towards the power grid. When the fourth energy storage unit and the fifth energy storage unit are controlled to be discharged towards the power grid, if the discharge power of the renewable energy system, the fourth energy storage unit and the fifth energy storage unit still cannot satisfy the charge power requirement of the power grid, the sixth energy storage unit may also be controlled to be discharged towards the power grid.

Optionally, in the embodiment, in a case where there are the fourth energy storage unit and the sixth energy storage unit and there is no sixth energy storage unit in the energy storage system, when the energy storage system is controlled to be discharged, the fourth energy storage unit is preferably controlled to be discharged towards the power grid, and then the sixth energy storage unit is controlled to be discharged towards the power grid. In other words, when the fourth energy storage unit is controlled to be discharged towards the power grid, if the discharge power of the renewable energy system and the fourth energy storage unit still cannot satisfy the charge power requirement of the power grid, the sixth energy storage unit may also be controlled to be discharged towards the power grid.

Optionally, in the embodiment, in a case where there are the fifth energy storage unit and the sixth energy storage unit and there is no fourth energy storage unit in the energy storage system, when the energy storage system is controlled to be discharged, the fifth energy storage unit is preferably controlled to be discharged towards the power grid, and then the sixth energy storage unit is controlled to be discharged towards the power grid. In other words, when the fifth energy storage unit is controlled to be discharged towards the power grid, if the discharge power of the renewable energy system and the fifth energy storage unit still cannot satisfy the charge power requirement of the power grid, the sixth energy storage unit may also be controlled to be discharged towards the power grid.

According to the embodiments of the present application, when the renewable energy system is controlled to charge the energy storage system, the time information of the energy storage unit at the preset DOD interval and the SOC information of the energy storage unit are fully considered, so that the renewable energy system can be controlled to be discharged towards to power grid in a certain priority order. The energy storage system is discharged reasonably, the problem of over-discharge of the energy storage unit caused by inaccurate SOC of the energy storage unit can be avoided, and the charging and discharging numbers of times of the energy storage unit can also be reduced to a certain extent, so that the performance of the energy storage system is improved and the service life of the energy storage system is prolonged.

Optionally, in the embodiments of the present application, the SOC of the undervoltage energy storage unit is less than or equal to a first undervoltage threshold.

When the SOC of a certain energy storage unit in the energy storage system is less than or equal to the first undervoltage threshold, the energy storage unit is the undervoltage energy storage unit, and it is needed to charge the undervoltage energy storage unit preferably. The undervoltage energy storage unit may be charged by utilizing the renewable energy system, the dischargeable energy storage unit or the power grid.

Optionally, in the embodiments of the present application, in a case where the undervoltage energy storage unit is charged by utilizing the renewable energy system or the chargeable energy storage unit, the SOC of the undervoltage energy storage unit is less than or equal to the first undervoltage threshold; or in a case where the undervoltage energy storage unit is charged by utilizing the power grid, the SOC of the undervoltage energy storage unit is less than or equal to the second undervoltage threshold, and the second undervoltage threshold is less than the first undervoltage threshold.

If the SOC of a certain energy storage unit is less than or equal to the first undervoltage threshold but greater than the second undervoltage threshold, the energy storage unit may be charged by utilizing the renewable energy system or the dischargeable energy storage unit and may not be charged by utilizing the power grid. If the SOC of a certain energy storage unit is less than or equal to the second undervoltage threshold, the energy storage unit may be charged by utilizing the renewable energy system, the dischargeable energy storage unit or the power grid.

According to the solution for controlling an energy storage system provided in the embodiments of the present application, only the undervoltage energy storage unit with less SOC may be charged by utilizing the power grid. The charging economic factor is considered while the undervoltage energy storage unit is charged, i.e., the charging cost of the undervoltage energy storage unit is lowered as far as possible while guaranteeing the performance and the service life of the energy storage system.

It shall be further understood that, in each embodiment of the present application, a magnitude of a sequence number of each process does not mean an execution sequence and the execution sequence of each process should be determined by its function and an internal logic and should not form any limit to an implementation process of the embodiments of the present application.

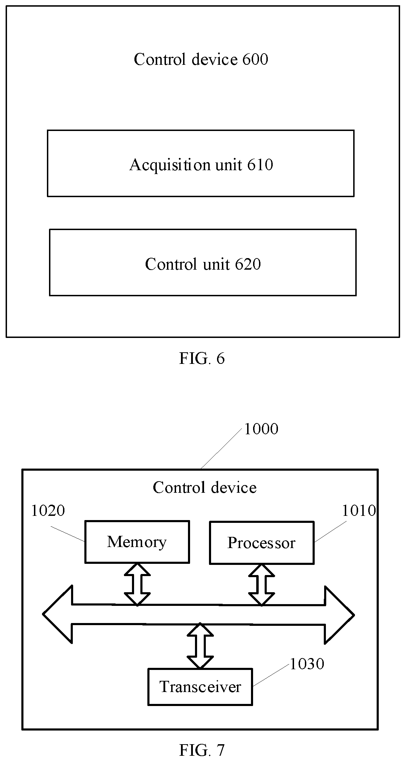

The above describes the method for controlling an energy storage system in the embodiments of the present application in detail. The device for controlling an energy storage system in the embodiments of the present application will be described in detail below in combination with FIG. 6 and FIG. 7. The technical features described in the method embodiment are applicable to the device embodiment below.

FIG. 6 is a schematic block diagram of a device 600 provided in the embodiments of the present application. The control device is coupled to an energy storage system, the energy storage system is coupled to an energy generation system, and the energy storage system includes a plurality of energy storage units. As shown in FIG. 6, the control device includes the following partial or entire contents:
an acquisition unit 610, configured to acquire discharge power information of the energy generation system and status information of the energy storage system, the status information of the energy storage system including information of an undervoltage energy storage unit; and
a control unit 620, configured to determine an energy management strategy of the energy storage system according to the discharge power information of the energy generation system and the status information of the energy storage system.

Optionally, in the embodiments of the present application, the control unit is specifically configured to: in a case where there is the undervoltage energy storage unit in the energy storage system and a discharge power of the energy generation system is greater than zero, charge the undervoltage energy storage unit by utilizing the energy generation system.

Optionally, in the embodiments of the present application, the status information of the energy storage system further includes discharge power information of a dischargeable energy storage unit, and the control unit is specifically configured to charge the undervoltage energy storage unit by utilizing the energy generation system and the dischargeable energy storage unit, where the discharge power of the energy generation system is less than a charging power of the undervoltage energy storage unit, and the discharge power of the dischargeable energy storage unit is greater than zero; or to charge the undervoltage energy storage unit by utilizing the energy generation system and a power grid, where the discharge power of the energy generation system is less than the charging power of the undervoltage energy storage unit, and the discharge power of the dischargeable energy storage unit is equal to zero.

Optionally, in the embodiments of the present application, the control unit is specifically configured to: in a case where there is the undervoltage energy storage unit in the energy storage system and a discharge power of the renewable energy system is equal to zero, charge the undervoltage energy storage unit by utilizing the dischargeable energy storage unit in the energy storage system and/or the power grid.

Optionally, in the embodiments of the present application, the status information of the energy storage system further includes information of the dischargeable energy storage unit, and the control unit is specifically configured to: in a case where the discharge power of the dischargeable energy storage unit is greater than zero, charge the undervoltage energy storage unit by utilizing the dischargeable energy storage unit; or in a case where the discharge power of the dischargeable energy storage unit is equal to zero, charge the undervoltage energy storage unit by utilizing the power grid.

Optionally, in the embodiments of the present application, the control unit is specifically configured to: in a case where there is no undervoltage energy storage unit in the energy storage unit and the power of the energy generation system is greater than the charge power of the power grid, control the energy generation system to charge the energy storage system.

Optionally, in the embodiments of the present application, the status information of the energy storage system includes time information of the energy storage unit at a preset DOD interval, and the control unit is specifically configured to: in a case where there is a first energy storage unit in the energy storage system, charge the first energy storage unit, where the first energy storage unit is an energy storage unit, the time of which at the preset DOD interval is longer than or equal to a preset time.

Optionally, in the embodiments of the present application, the status information of the energy storage system includes SOC information of the energy storage unit, and the control unit is specifically configured to: in a case where there is a second energy storage unit in the energy storage system, charge the second energy storage unit, where the second energy storage unit is an energy storage unit except for the first energy storage unit, with an SOC being less than or equal to a first charging threshold, and a charging priority of the second energy storage unit is inferior to that of the first energy storage unit.

Optionally, in the embodiments of the present application, the control unit is specifically configured to: in a case where there is a third energy storage unit in the energy storage system, charge the third energy storage unit, where the third energy storage unit is an energy storage unit except for the first energy storage unit and the second energy storage unit, with an SOC being less than or equal to a second charging threshold and the second charging threshold being greater than the first charging threshold, and a charging priority of the third energy storage unit is inferior to that of the first energy storage unit or the second energy storage unit.

Optionally, in the embodiments of the present application, the control unit is specifically configured to: in a case where there is no undervoltage energy storage unit in the energy storage system and the power of the renewable energy system is less than the charge power of the power grid, control the energy storage system to be discharged towards the power grid.

Optionally, in the embodiments of the present application, the control unit is specifically configured to: in a case where there is a fourth energy storage unit in the energy storage system, discharge the fourth energy storage unit, where the fourth energy storage unit is an energy storage unit, the time of which at the preset DOD interval is longer than or equal to a preset time.

Optionally, in the embodiments of the present application, the control unit is specifically configured to: in a case where there is a fifth energy storage unit in the energy storage system, discharge the fifth energy storage unit, where the fifth energy storage unit is an energy storage unit except for the fourth energy storage unit, with an SOC being greater than or equal to a first discharging threshold, and a discharging priority of the fifth energy storage unit is inferior to that of the fourth energy storage unit.

Optionally, in the embodiments of the present application, the control unit is specifically configured to: in a case where there is a sixth energy storage unit in the energy storage system, discharge the sixth energy storage unit, where the sixth energy storage unit is an energy storage unit except for the fourth energy storage unit and the fifth energy storage unit, with an SOC being greater than or equal to a second discharging threshold and the second discharging threshold being less than the first discharging threshold, and a discharging priority of the sixth energy storage unit is inferior to that of the fourth energy storage unit or the fifth energy storage unit.

Optionally, in the embodiments of the present application, the SOC of the undervoltage energy storage unit is less than or equal to a first undervoltage threshold.

Optionally, in the embodiments of the present application, in a case where the undervoltage energy storage unit is charged by utilizing the energy generation system or the chargeable energy storage unit, the SOC of the undervoltage energy storage unit is less than or equal to the first undervoltage threshold; or in a case where the undervoltage energy storage unit is charged by utilizing the power grid, the SOC of the undervoltage energy storage unit is less than or equal to the second undervoltage threshold, and the second undervoltage threshold is less than the first undervoltage threshold.

It shall be understood that the above and other operations and/or functions of each module in the device 600 for controlling an energy storage system are intended to achieve corresponding flows in each method in FIGs. 3-5. For simplicity, elaborations are omitted herein.

Optionally, the embodiments of the present application further provide an energy storage system, coupled to an energy generation system, where the energy storage system includes a plurality of energy storage units and the control device 600 provided in above various embodiments. The control device is configured to determine an energy management strategy of the energy storage system.

FIG. 7 is a schematic block diagram of a device 1000 for controlling an energy storage system provided in the embodiments of the present application. As shown in FIG. 7, the control device 1000 includes a processor 1010 and a memory 1020, where the memory 1020 is configured to store an instruction, and the processor 1010 is configured to read the instruction and to execute the methods in above various embodiments of the present application based on the instruction.

The memory 1020 either may be an independent apparatus independent from the processor 1010 or may be integrated in the processor 1010.

Optionally, as shown in FIG. 7, the device 1000 for controlling an energy storage system may further include a transceiver 1030, and the processor 1010 may control the transceiver 1030 to be communicated with other devices. Specifically, the transceiver may send information or data to other devices or receive information or data sent by other devices.

It shall be understood that the processor in the embodiment of the application may be an integrated circuit chip and has a signal processing capability. In an implementation process, each step of the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. The processor may implement or execute the methods, steps and logic block diagrams disclosed according to the embodiments of the present application. The general-purpose processor may be a microprocessor or may also be any conventional processor, and so on. The steps of the method disclosed in combination with the embodiments of the present application may be directly embodied to be executed and completed by a hardware decoding processor or executed and completed by a combination of hardware and software modules in the decoding processor. The software modules may be located in a mature storage medium of the field, such as RAM, flash memory, ROM, a programmable ROM or an erasable programmable memory and a register. The storage medium is located in a memory, and the processor reads information in the memory, and completes the steps of the method in combination with hardware.

It may be understood that the memory in the embodiment of the application may be a volatile memory or a nonvolatile memory, or may include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It shall be noted that the memory of the system and method described herein is intended to include, but not limited to, memories of these and any other proper types.

The embodiments of the present application also provide a computer-readable storage medium, which is configured to store a computer program.

Optionally, the computer readable storage medium may be applied to the control device of the energy storage system in the embodiments of the present application, and the computer program runs in a computer to enable the computer to execute corresponding flows implemented by the control device in each method of the embodiments of the present application. For simplicity, elaborations are omitted herein.

The embodiments of the present application also provide a computer program product, which includes a computer program instruction.

Optionally, the computer program product may be applied to the control device of the energy storage system in the embodiments of the present application, and the computer program instruction runs in a computer to enable the computer to execute corresponding flows implemented by the control device of the energy storage system in each method of the embodiments of the present application. For simplicity, elaborations are omitted herein.

The embodiments of the present application also provide a computer program.

Optionally, the computer program may be applied to the control device of the energy storage system in the embodiments of the present application, and the computer program runs in a computer to enable the computer to execute corresponding flows implemented by the control device of the energy storage system in each method of the embodiments of the present application. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are performed in the form of hardware or software depends on specific application and design constraint conditions of the technical scheme. Professionals may implement the described functions of each specific application in different ways, but such implementation should not be interpreted as a departure from the scope of the present application.

Those skilled in the art may clearly learn about that specific working processes of the system, device and unit described above may refer to the corresponding processes in the method embodiment and will not be elaborated herein for convenient and brief description.

In some embodiments provided by the present application, it shall be understood that the disclosed system, device and method may be implemented in another manner. For example, the device embodiments described above are only illustrative. For example, the division of units is only a logical function division. In actual implementation, there may be other division methods. For example, multiple units or components may be combined or integrated into another system, or some features may be omitted, or not implemented. In addition, coupling or direct coupling or communication connection between each displayed or discussed component may be indirect coupling or communication connection, implemented through some interfaces, of the device or the units, and may be electrical and mechanical or adopt other forms.

The units described as separate components may or may not be physically separated, and the components displayed as units may or may not be physical units, i.e., they may be located in one place, or they may be distributed on multiple network units. Part or all of the units may be selected to achieve the purpose of the solutions of the embodiments according to a practical requirement.

In addition, each functional unit in each embodiment of the application may be integrated into a processing unit, each unit may also physically exist independently, and two or more than two units may also be integrated into a unit.

When being realized in form of software functional unit and sold or used as an independent product, the function may also be stored in a computer-readable storage medium. Based on such an understanding, the technical solutions of the present application substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the present application. The abovementioned storage medium includes various media capable of storing program codes such as a U disk, a mobile hard disk, an ROM, an RAM, a magnetic disk or an optical disk.

The above is only the specific implementation mode of the application and not intended to limit the scope of protection of the application. Any variations or replacements apparent to those skilled in the art within the technical scope disclosed by the application shall fall within the scope of protection of the application. Therefore, the scope of protection of the application shall be subject to the scope of protection of the claims.

## Claims

1. A method for controlling an energy storage system, wherein the energy storage system is coupled to an energy generation system, and the energy storage system includes a plurality of energy storage units, the method comprising the following steps:
acquiring discharge power information of the energy generation system and status information of the energy storage system, the status information of the energy storage system including information of an undervoltage energy storage unit; and
determining an energy management strategy of the energy storage system according to the discharge power information of the energy generation system and the status information of the energy storage system.

2. The method according to claim 1, wherein the step of determining an energy management strategy of the energy storage system comprises:
in a case where there is the undervoltage energy storage unit in the energy storage system and the discharge power of the energy generation system is greater than zero, charging the undervoltage energy storage unit by utilizing the energy generation system.

3. The method according to claim 2, wherein the status information of the energy storage system further comprises discharge power information of a dischargeable energy storage unit, and the step of charging the undervoltage energy storage unit by utilizing the energy generation system comprises:
charging the undervoltage energy storage unit by utilizing the energy generation system and the dischargeable energy storage unit, wherein the discharge power of the energy generation system is less than a charging power of the undervoltage energy storage unit, and the discharge power of the dischargeable energy storage unit is greater than zero; or
charging the undervoltage energy storage unit by utilizing the energy generation system and a power grid, wherein the discharge power of the energy generation system is less than the charging power of the undervoltage energy storage unit, and the discharge power of the dischargeable energy storage unit is equal to zero.

4. The method according to claim 1 or 2, wherein the step of determining an energy management strategy of the energy storage system comprises:
in a case where there is the undervoltage energy storage unit in the energy storage system and a discharge power of the renewable energy is equal to zero, charging the undervoltage energy storage unit by utilizing the dischargeable energy storage unit in the energy storage system and/or the power grid.

5. The method according to claim 4, wherein the status information of the energy storage system further comprises discharge power information of the dischargeable energy storage unit, and the step of charging the undervoltage energy storage unit by utilizing the dischargeable energy storage unit and/or the power grid comprises:
in a case where the discharge power of the dischargeable energy storage unit is greater than zero, charging the undervoltage energy storage unit by utilizing the dischargeable energy storage unit; or
in a case where the discharge power of the dischargeable energy storage unit is equal to zero, charging the undervoltage energy storage unit by utilizing the power grid.

6. The method according to any one of claims 1-5, wherein the step of determining an energy management strategy of the energy storage system comprises:
in a case where there is no undervoltage energy storage unit in the energy storage system and the discharge power of the energy generation system is greater than a charge power of the power grid, controlling the energy generation system to charge the energy storage system.

7. The system according to claim 6, wherein the status information of the energy storage system comprises time information of the energy storage unit at a preset DOD interval, and the step of controlling the renewable energy to charge the energy storage system comprises:
in a case where there is a first energy storage unit in the energy storage system, charging the first energy storage unit, wherein the first energy storage unit is an energy storage unit, the time of which at the preset DOD interval is longer than or equal to a preset time.

8. The method according to claim 7, wherein the status information of the energy storage system comprises SOC information of the energy storage unit, and the step of controlling the renewable energy to charge the energy storage system comprises:
in a case where there is a second energy storage unit in the energy storage system, charging the second energy storage unit, wherein the second energy storage unit is an energy storage unit except for the first energy storage unit, with an SOC being less than or equal to a first charging threshold, and a charging priority of the second energy storage unit is inferior to that of the first energy storage unit.

9. The system according to claim 8, wherein the step of controlling the renewable energy to charge the energy storage system comprises:
in a case where there is a third energy storage unit in the energy storage system, charging the third energy storage unit, wherein the third energy storage unit is an energy storage unit except for the first energy storage unit and the second energy storage unit, with an SOC being less than or equal to a second charging threshold and the second charging threshold being greater than the first charging threshold, and a charging priority of the third energy storage unit is inferior to that of the first energy storage unit or the second energy storage unit.

10. The method according to any one of claims 1-9, wherein the step of determining an energy management strategy of the energy storage system comprises:
in a case where there is no undervoltage energy storage unit in the energy storage system and the discharge power of the renewable energy system is less than the discharge power of the power grid, controlling the energy storage system to be discharged towards the power grid.

11. The method according to claim 10, wherein when the step of controlling the energy storage system to be discharged towards the power grid comprises:
in a case where there is a fourth energy storage unit in the energy storage system, discharging the fourth energy storage unit, wherein the fourth energy storage unit is an energy storage unit, the time of which at the preset DOD interval is longer than or equal to a preset time.

12. The method according to claim 11, wherein the step of controlling the energy storage system to be discharged towards the power grid comprises:
in a case where there is a fifth energy storage unit in the energy storage system, discharging the fifth energy storage unit, wherein the fifth energy storage unit is an energy storage unit except for the fourth energy storage unit, with an SOC being greater than or equal to a first discharging threshold, and a discharging priority of the fifth energy storage unit is inferior to that of the fourth energy storage unit.

13. The method according to claim 12, wherein the step of controlling the energy storage system to be discharged towards the power grid comprises:
in a case where there is a sixth energy storage unit in the energy storage system, discharging the sixth energy storage unit, wherein the sixth energy storage unit is an energy storage unit except for the fourth energy storage unit and the fifth energy storage unit, with an SOC being greater than or equal to a second discharging threshold and the second discharging threshold being less than the first discharging threshold, and a discharging priority of the sixth energy storage unit is inferior to that of the fourth energy storage unit or the fifth energy storage unit.

14. The method according to any one of claims 1-13, wherein the SOC of the undervoltage energy storage unit is less than or equal to a first undervoltage threshold.

15. The method according to any one of claims 1-13, wherein in a case where the undervoltage energy storage unit is charged by utilizing the energy generation system or the dischargeable energy storage unit, the SOC of the undervoltage energy storage unit is less than or equal to the first undervoltage threshold; or in a case where the undervoltage energy storage unit is charged by utilizing the power grid, the SOC of the undervoltage energy storage unit is less than or equal to a second undervoltage threshold, and the second undervoltage threshold is less than the first undervoltage threshold.

16. A control device, coupled to an energy storage system, wherein the energy storage system is coupled to an energy generation system, and the energy storage system includes a plurality of energy storage units, the control device comprising:
an acquisition unit, configured to acquire discharge power information of the energy generation system and status information of the energy storage system, the status information of the energy storage system including information of an undervoltage energy storage unit; and
a control unit, configured to determine an energy management strategy of the energy storage system according to the discharge power information of the energy generation system and the status information of the energy storage system.

17. The control device according to claim 16, wherein the control unit is specifically configured to:
in a case where there is the undervoltage energy storage unit in the energy storage system and the discharge power of the energy generation system is greater than zero, charge the undervoltage energy storage unit by utilizing the energy generation system.

18. An energy storage system, coupled to an energy generation system, wherein the energy storage system comprises a plurality of energy storage units and the control device according to claim 16 or 17.

19. A device for controlling an energy storage system, comprising a memory and a processor, wherein the memory is configured to store an instruction, and the processor is configured to read the instruction and to execute the method according to any one of claims 1-15 according to the instruction.
